# DEMANDE DE BREVET EUROPEEN

(11) **EP 1 109 381 A1**
(43) Date de publication de la demande: **20.06.2001**
(21) Numéro de dépôt: 00403348.6
(22) Date de dépôt: 30.11.2000
(51) Int. Cl.: H04M 1/57, H04Q 7/38, H04M 7/00

(54) **Procédé pour la communication d'un identifiant d'abonné appelant à un abonné téléphoniquement appelé et matériels de télécommunications appliquant ce procédé.**

(30) Priorité: 16.12.1999 FR 9915868
(71) Demandeur: ALCATEL, 75008 Paris (FR)
(72) Inventeur: Le Creff, Michel, 95450 Vigny (FR); Ollivier, Loic, 22700 Perros-Guirec (FR)
(74) Mandataire: Lamoureux, Bernard

(57) **Abrégé**

Procédé et matériels pour la communication à un abonné téléphonique ou radiotéléphonique d'un identifiant relatif à l'abonné qui l'appelle à l'aide d'un terminal (3 ou 4') de réseau téléphonique (1) ou radiotéléphonique (2), lorsque l'appel est effectué, via une ligne analogique (L) du réseau téléphonique qui est attribuée à une installation de desserte d'abonné et notamment une base partagée (6 ou 7) à laquelle est relié le terminal de l'abonné appelant.

Après une phase connue impliquant une prise de ligne et couramment la réception par l'installation d'une tonalité d'invitation à numéroter en provenance du réseau, via la ligne analogique prise, il est prévu l'envoi par l'installation sur la ligne d'un code signalétique de service (CS) suivi par un ensemble d'identifiants d'abonnés appelant et appelé (ID1, ID2), pour notamment permettre l'exploitation de l'identifiant d'abonné appelé pour la réalisation de l'appel et la transmission de l'identifiant d'abonné appelant à l'abonné appelé.

## Description

L'invention concerne un procédé pour la communication à un abonné appelé d'un identifiant relatif à l'abonné qui l'appelle, lorsque cet abonné effectue son appel, au moyen d'un terminal téléphonique ou radiotéléphonique et plus particulièrement d'un mobile de réseau radiomobile, via une ligne d'un réseau téléphonique à laquelle le terminal d'appel se relie par l'intermédiaire d'une installation de desserte d'abonnés et notamment d'une base de rattachement prévue pour être partagée par un petit nombre de terminaux identiques à lui ou compatibles avec lui. Elle concerne aussi les matériels de télécommunications respectivement prévus pour permettre la mise en oeuvre de ce procédé, ces matériels comprenant les terminaux téléphoniques et radiotéléphoniques notamment de type mobile, les installations de desserte d'abonnés et notamment les bases de rattachement partagées prévues pour de tels terminaux et les centraux téléphoniques au niveau desquels les installations se raccordent aux réseaux téléphoniques.

Les matériels qui sont mis en oeuvre dans les systèmes de télécommunications modernes pour permettre la mise en communication d'utilisateurs disposant de terminaux téléphoniques, ou de terminaux radiotéléphoniques et en particulier de mobiles de réseau radiomobile, permettent déjà, dans un certain nombre de cas, à un abonné appelé d'identifier l'abonné qui l'appelle. Ainsi, par exemple, il y a de nombreux terminaux téléphoniques qui permettent d'afficher un identifiant relatif à l'usager appelant, lorsqu'un appel est reçu, à partir du moment où les divers matériels de télécommunications impliqués dans cet appel sont prévus et configurés pour permettre cet affichage.

Un tel identifiant est classiquement le numéro de la ligne téléphonique utilisée par l'usager appelant, dans le cas d'un appel effectué au moyen d'un poste relié à un central téléphonique par l'intermédiaire d'une ligne téléphonique. Le numéro d'appel attribué à un abonné d'un réseau radiomobile constitue également un identifiant classiquement affiché. Comme connu, cet identifiant d'abonné est constitué par le numéro MSISDN de l'abonné appelant dans le cas d'un appel émanant d'un mobile GSM.

Il existe cependant des configurations de matériels téléphoniques qui ne permettent pas une identification satisfaisante des abonnés appelants. Tel est notamment le cas lorsque, dans des conditions déterminées d'exploitation, les communications demandées par un abonné au moyen d'un terminal radiotéléphonique, normalement prévu pour communiquer dans le cadre d'un réseau radiotéléphonique fournissant un service de communications au public, s'établissent au travers d'une installation de desserte d'abonnés et notamment d'une base de rattachement, généralement privée, qui est téléphoniquement reliée par une ou des lignes analogiques à un central d'un réseau téléphonique et qui est prévue pour être partagée par un petit nombre d'abonnés. Une telle base est prévue pour permettre aux abonnés, ici dits accrédités, qui se la partagent, d'entrer en communication par son intermédiaire avec l'ensemble des abonnés auxquels le réseau téléphonique donne accès. Il est habituellement prévu, dans un réseau téléphonique comportant des abonnés disposant de lignes téléphoniques analogiques, que le numéro d'appel prévu pour chaque ligne constitue l'identifiant de l'abonné qui dispose de cette ligne.

En conséquence, tout appel réalisé à destination d'un abonné, joignable par l'intermédiaire du réseau téléphonique, depuis un terminal radiotéléphonique par l'intermédiaire d'une base de rattachement, telle qu'envisagée ci-dessus, est considéré par le réseau téléphonique comme ayant pour identifiant d'abonné appelant le numéro d'appel attribué à la ligne téléphonique, reliant la base au réseau, par laquelle l'appel est effectué. L'information fournie, dans ce cas, pour un appel transmis par une telle ligne, vers un abonné appelé, n'est pas satisfaisante, en particulier si l'appel aboutit dans une messagerie permettant à l'abonné appelé d'enregistrer les appels arrivés restés sans réponse, notamment en son absence. L'identifiant fourni ne permet pas à l'abonné appelé de connaître le terminal qui est à l'origine de l'appel. Insuffisamment précise, une telle information peut même s'avérer trompeuse, si l'abonné appelé tente ultérieurement de rappeler celui qui l'a initialement appelé, si celui-ci utilise un terminal radiotéléphonique mobile et qu'il n'est plus joignable, au moins temporairement, par l'intermédiaire de la base de rattachement qu'il a utilisée lors de son appel et dont il s'est par exemple éloigné.

Un problème similaire se pose avec certaines bases purement téléphoniques, qui permettent de faire partager une ligne téléphonique analogique reliée à un central téléphonique de rattachement, ou éventuellement un petit nombre de telles lignes, par des terminaux téléphoniques déterminés, localement reliés par fils ou, éventuellement, de type sans fil et reliés par voie hertzienne à la base. Les terminaux téléphoniques associés à une telle base, n'ont pas d'identifiant individuel vis-à-vis du central de rattachement à laquelle la base est reliée. Seul est transmis le numéro de la ligne téléphonique analogique, affectée à la base, qui est utilisé à l'occasion d'un appel par un des terminaux qui se partagent l'utilisation de cette base. Là encore la communication d'un tel numéro de ligne à un terminal appelé n'est pas pleinement satisfaisante, puisqu'elle ne permet à un abonné appelé d'identifier la base mais pas le terminal qui est à l'origine de l'appel.

L'invention propose donc un procédé pour la communication à un abonné, téléphonique ou radiotéléphonique joignable par l'intermédiaire d'un réseau téléphonique, d'un identifiant relatif à un abonné de réseau téléphonique ou radiotéléphonique qui l'appelle au moyen d'un terminal, lorsque cet abonné effectue son appel, via une ligne analogique du réseau téléphonique qui est attribuée à une installation avec laquelle cet abonné s'est mis en liaison via le terminal qu'il utilise, ladite installation étant prévue pour permettre un accès partagé de plusieurs terminaux, identiques ou compatibles, au réseau téléphonique.

Selon une caractéristique de l'invention, ce procédé prévoit que l'appel effectué par un terminal en liaison avec une installation de desserte d'abonné, tel que notamment une base, pour un appel à destination d'un abonné joignable par l'intermédiaire du réseau téléphonique, qui implique de manière connue une phase préalable de prise de ligne au niveau de l'installation et couramment la réception par cette installation d'une tonalité d'invitation à numéroter en provenance du réseau, via la ligne prise, comporte de plus l'envoi sur la ligne par l'installation d'un ensemble d'identifiants d'abonnés comprenant un identifiant d'abonné appelant et un identifiant de l'abonné appelé par l'intermédiaire du terminal de l'abonné appelant pour l'appel en cours, qui est éventuellement précédé d'un code signalétique de service (CS), de manière à permettre l'exploitation de l'identifiant d'abonné appelé par le réseau téléphonique pour la réalisation de l'appel, la transmission de l'identifiant d'abonné appelant à l'abonné appelé, via le réseau téléphonique, et éventuellement l'exploitation de cet identifiant d'abonné appelant par ce réseau.

L'invention, ses caractéristiques et ses avantages sont précisés dans la description qui suit en liaison avec les figures évoquées ci-dessous.

La figure 1 présente un schéma synoptique d'un ensemble de télécommunications où sont représentées une base de rattachement pour des terminaux téléphoniques et une base de rattachement pour des terminaux radiotéléphoniques prévus les uns et les autres pour bénéficier de la mise en oeuvre du procédé selon l'invention.

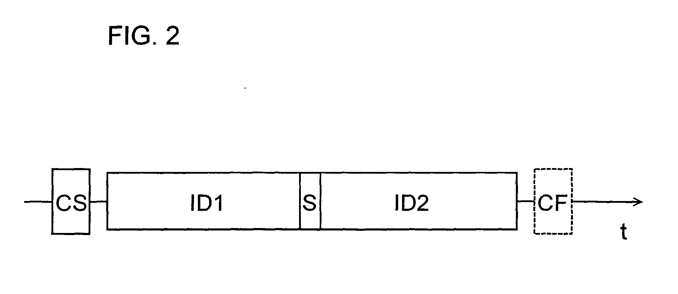

La figure 2 présente un diagramme temporel relatif au procédé de communication selon l'invention.

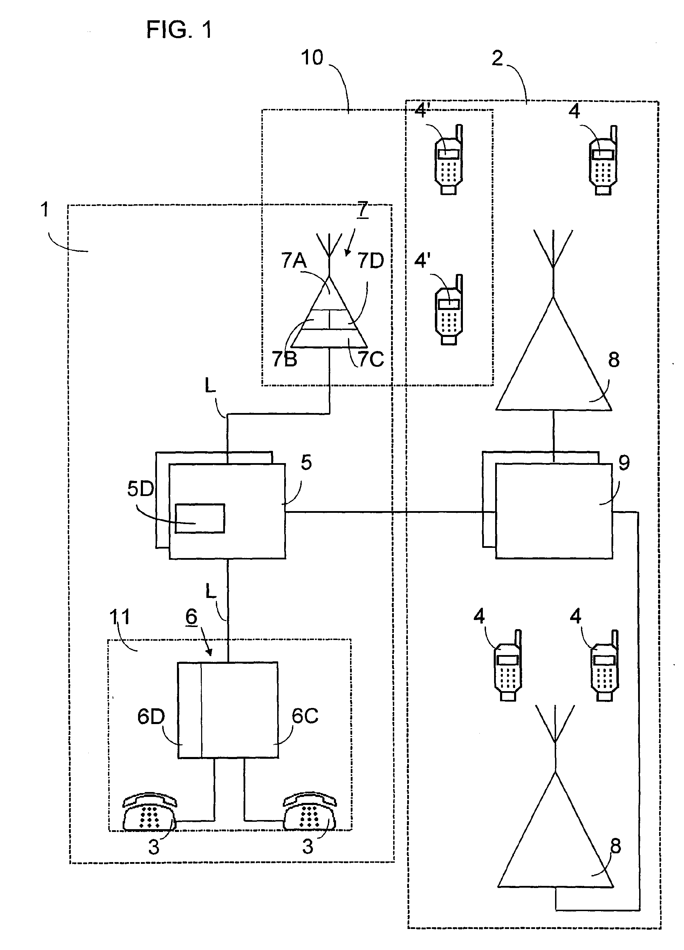

Le procédé de communication selon l'invention est destiné à être mis à l'oeuvre dans le cadre d'un système de télécommunications permettant l'établissement de communications par voie téléphonique et/ou radiotéléphonique comme symbolisé par un réseau téléphonique 1 et par un réseau radiotéléphonique 2 sur la figure 1. A cet effet les usagers sont supposés équipés de terminaux téléphoniques ou radiotéléphoniques ici symbolisés par des postes téléphoniques 3 et par des terminaux radiotéléphoniques mobiles 4 ou 4'. Le ou les réseaux téléphoniques comportés par un système de télécommunications, tel qu'envisagé ici, sont classiquement constitués autour de centraux téléphoniques interconnectés. Ils sont ici symbolisés par un central téléphonique 5 auquel est reliée une installation de desserte d'abonnés. Cette installation est par exemple constituée par une base téléphonique de rattachement 6 desservant une pluralité de terminaux téléphoniques 3 et/ou par une base radiotéléphonique de rattachement 7 prévue pour servir d'interface d'accès au réseau téléphonique 1, dans des conditions déterminées, pour une pluralité de terminaux radiotéléphoniques 4', accrédités. Les terminaux radiotéléphoniques 4' sont supposés être de classiques terminaux d'abonnés d'un réseau radiotéléphonique et par exemple des mobiles d'abonné d'un réseau radiomobile fournissant un service de communications au public, tel qu'un réseau de type GSM. Un tel réseau radiotéléphonique 2 comporte, comme il est connu, une pluralité de stations de base 8 géographiquement réparties pour permettre à un terminal radiotéléphonique d'abonné quelconque 4 ou 4', de ce réseau 2 ou d'un réseau associé, d'établir et de recevoir des communications radiotéléphoniquement, dès qu'il est à portée radio convenable d'au moins une des stations de base auprès de laquelle il peut alors se localiser et avec laquelle il peut communiquer bidirectionnellement. Chaque station de base 8 permet à un abonné, alors localisé auprès d'elle, d'établir une communication soit avec un autre terminal radiotéléphonique d'abonné de réseau radiotéléphonique, dès lors que ce terminal 4 ou 4' est lui-même localisé auprès d'une station de base 8 du réseau ou d'un réseau radiotéléphonique associé, soit encore avec un terminal téléphonique d'un abonné de réseau téléphonique, tel qu'un poste 3, si le réseau radiotéléphonique permet d'établir une communication avec le réseau téléphonique de desserte de ce terminal téléphonique. Comme il est connu et comme schématisé sur la figure 1, les stations de base d'un réseau radiotéléphonique communiquent entre elles par l'intermédiaire de centres de commutation auxquelles elles sont reliées par des liaisons de transmission, usuellement filaires, pour l'établissement des communications concernant les terminaux radiotéléphoniques qu'elles servent. Ceci est symbolisé par un centre de commutation 9 par l'intermédiaire desquelles les stations de base 8 sont reliées sur la figure 1. Comme il est également connu les centres de commutation des réseaux radiotéléphoniques sont classiquement reliés aux centraux téléphoniques des réseaux téléphoniques dont ils peuvent éventuellement faire partie, pour permettre l'établissement de communications tant entre des terminaux d'un réseau radiotéléphonique et des terminaux d'un réseau téléphonique qu'entre des terminaux de deux réseaux radiotéléphoniques reliés entre eux par l'intermédiaire d'un réseau téléphonique. Ceci est symbolisé sur la figure 1 par la liaison qui unit le centre de commutation 9 du réseau radiotéléphonique 2, à un central téléphonique 5 du réseau téléphonique 1. Il est ainsi envisageable de relier un terminal radiotéléphonique 4' localisé auprès de la base radiotéléphonique 7 avec un terminal radiotéléphonique 4 localisé auprès de l'une des stations de base 8 en utilisant une liaison de transmission filaire reliant la base 7 à la station de base 8 concernée, via au moins un central téléphonique 5 et un centre de commutation 9. Ces derniers peuvent éventuellement ne former qu'une seule unité.

Les bases de rattachement 6 et 7, telles qu'envisagées dans la présente demande sont des matériels de télécommunication qui sont prévus pour permettre chacune à un groupe de terminaux de se partager l'usage d'une ou d'un petit nombre de lignes téléphoniques analogiques L reliant individuellement la base considérée à un central téléphonique 5. Dans l'exemple envisagé, la base téléphonique 6 est destinée à être partagée entre un petit nombre de terminaux téléphoniques 3 , alors que la base 7 est prévue pour un petit groupe de terminaux radiotéléphoniques 4'. Chaque base 6 ou 7 comporte usuellement des moyens de commutation permettant de mettre sélectivement en liaison un des terminaux accrédités, qui lui sont reliés, avec une ligne téléphonique. Chacune de ces bases comporte aussi une logique de gestion 6D ou 7D agissant plus particulièrement sur les moyens de commutation de la base en fonction des besoins et des disponibilités. Chaque base 7 de rattachement de terminaux radiotéléphoniques comporte de plus des moyens d'émission-réception par voie radiotéléphonique 7A et des moyens d'interface 7B pour permettre le fonctionnement de ces moyens d'émission-réception en liaison avec les moyens de commutation 7C sous le contrôle de la logique de gestion 7D de la base et en fonction des demandes. Ces demandes parviennent par voie hertzienne des terminaux radiotéléphoniques accrédités ou par voie téléphonique des autres terminaux. L'accès au réseau téléphonique 1 par des terminaux radiotéléphoniques 4 au travers d'une base de rattachement 7 est rendu possible pour les terminaux accrédités 4' qui sont dans la zone de couverture radiotéléphonique 10 de cette base 7 et qui se sont valablement localisés auprès d'elle, comme ils le font, dans d'autres conditions, auprès d'une station de base de réseau radiotéléphonique 2.

Dans une forme de réalisation, les terminaux radiotéléphoniques accrédités 4' sont par exemple des terminaux d'abonné d'une même organisation, telle qu'une petite entreprise, qui dispose d'une installation de desserte d'abonnés pour ses besoins, cette installation étant ici supposée constituée base 7. Les terminaux accrédités 4' sont alors susceptibles d'être de classiques terminaux radiotéléphoniques mobiles d'un réseau radiotéléphonique 2 qui se localisent auprès de la base 7, lorsqu'ils sont dans sa zone de couverture pour communiquer par voie téléphonique avec l'ensemble des abonnés auxquels le réseau téléphonique 1 donne accès. En dehors de cette zone, un de ces terminaux radiotéléphoniques 4' se conduit de manière classique et se localise auprès d'une des stations de base 8 du réseau 2 à portée radiotéléphonique de laquelle il est alors situé.

De manière analogue, une base téléphonique 6 comporte une logique de gestion 6D associée aux moyens de commutation 6C qui permettent de relier les terminaux téléphoniques 3, qu'elle dessert au central de rattachement 5 dont elle dépend par l'intermédiaire de la ou des lignes téléphoniques analogiques L qui la relient à ce central. Comme il est connu, les moyens de commutation 6C peuvent être particulièrement réduits si les terminaux 3 sont montés en parallèle sur une ligne. Comme il est également connu, la base téléphonique 6 peut éventuellement desservir des téléphones sans fil, si elle est dotée de moyens d'émission-réception radio lui permettant de communiquer de manière sélective avec, par exemple, le combiné d'un terminal sans fil, ce combiné étant le plus souvent équipé d'un clavier de numérotation incorporé.

Tant avec une base radiotéléphonique 7 qu'avec une base téléphonique 6 reliée à un central téléphonique de rattachement 5 par une ou des lignes téléphoniques L, de type analogique, c'est normalement le numéro de la ligne téléphonique exploitée qui est retenu comme numéro à fournir, quel que soit le terminal appelant par l'intermédiaire de la base considérée, lorsqu'un identifiant d'abonné appelant est à fournir au terminal de l'abonné appelé.

Un terminal radiotéléphonique 4' dispose d'un identifiant dans le cadre du réseau radiotéléphonique 2 auquel il est abonné et il le communique à la base 7 auprès de laquelle il se localise, avant de communiquer par son intermédiaire. Il n'est pas nécessaire que ce numéro soit transmis au central téléphonique de rattachement de la base pour l'établissement d'un appel par voie téléphonique. Comme connu, il suffit qu'une phase de prise d'une ligne téléphonique reliant la base au central soit réalisée pour que généralement le central émette une tonalité d'invitation à numéroter sur la ligne. Comme également connu, cette phase implique classiquement un bouclage de la ligne téléphonique utilisée en vue d'en assurer la continuité électrique au niveau de la base. Il peut également être prévu que la phase de prise de ligne s'effectue sans envoi de tonalité de numérotation par le central de rattachement si l'installation et le central sont programmés pour que cet envoi ne soit pas nécessaire.

D'une manière analogue, il n'est pas nécessaire que l'éventuel identifiant d'un terminal téléphonique soit communiqué au central de rattachement dont il dépend dans le cas de terminaux téléphoniques reliés à une base 6, puisqu'il n'a ordinairement aucune fonction lors d'un appel établi par l'intermédiaire de la base sur une ligne téléphonique analogique la reliant à son centre de rattachement.

Selon l'invention, il est donc prévu de faire émettre par les bases téléphoniques 6 ou radiotéléphoniques 7, l'identifiant de l'abonné qui appelle par leur intermédiaire, au moins à partir du moment où ce service est requis pour l'abonné appelé.

Cet identifiant est préférablement constitué par le numéro d'appel de l'abonné dans le cas d'un terminal radiotéléphonique de réseau radiotéléphonique du type de ceux qui fournissent un service de communications au public, soit par conséquent le numéro MSISDN de l'abonné dans le cas d'un réseau GSM. Dans le cas de terminaux téléphoniques 3 reliés à une base téléphonique 6, l'identifiant d'abonné appelant est constitué par un codage spécifique individuellement attribué à chaque terminal au niveau de la base de desserte. Il correspond usuellement à un code alphanumérique simple.

En cas d'appel établi par un terminal 3, via une base 6, ou par un terminal 4', via une base 7, et dans une première forme de réalisation, il est prévu que la base concernée produise un code signalétique de service CS à réception de la tonalité d'invitation à numéroter qu'elle reçoit de son central de rattachement 5, au travers de la ligne téléphonique qu'elle a prise pour cet appel. Ce code CS est utilisé par la base pour signaler à son centre de rattachement qu'elle va émettre un ensemble d'identifiants relatifs à un abonné appelant et à un abonné appelé. Le code CS lui-même est constitué par exemple par une tonalité particulière émise pendant un laps de temps déterminé par la base sur la ligne téléphonique qu'elle a prise. Cette prise de ligne s'effectue sous le contrôle de la logique de gestion 6D ou 7D à réception d'une demande en vue de l'établissement d'une communication par un usager disposant d'un terminal accrédité à destination d'un abonné, téléphonique ou radiotéléphonique, joignable par l'intermédiaire du réseau téléphonique 1.

Suite à l'émission du code CS, la base émettrice envoie un ensemble d'identifiants d'abonné, comprenant un identifiant d'abonné appelant et un identifiant d'abonné appelé, en utilisant le code communément exploité en matière de numérotation par la base et par son centre téléphonique de rattachement, par exemple un code multifréquence Q23, un code V23 ou un code BELL202. L'émission de cet ensemble d'identifiants est éventuellement suivie de celle d'un code de fin CF, de même nature que le code de service CS.

Selon une variante de réalisation et notamment dans le cas où il est prévu que l'identifiant appelant suive l'identifiant appelé, il est prévu de transmettre l'ensemble d'identifiants, sans le faire précéder de code de service, le central de rattachement étant alors programmé pour déterminer que l'arrivée d'un ensemble d'identifiants à la place d'un identifiant unique dans le cadre d'un appel signifie que le second identifiant est celui à prendre en compte en tant qu'identifiant d'abonné appelé.

Dans une forme de réalisation, le premier identifiant ID1 émis est celui de l'abonné appelant son émission est suivie de celle d'un séparateur S, elle-même suivie de l'émission de l'identifiant ID2 de l'abonné appelé. La séquence obtenue est par exemple de la forme suivante:
*0ZABPQMCDU#0ZABPQMCDU

Le séparateur S se traduit dans cet exemple par l'envoi de # entre le numéro d'appel de l'abonné appelant et le numéro d'appel de l'abonné appelé. L'ensemble logique de gestion 5D du centre de rattachement est bien entendu programmé pour être apte à reconnaître une telle séquence. Il permet d'exploiter le numéro appelé aux fins d'établissement de la communication en liaison avec le central de rattachement 5 de l'abonné appelé, si ce dernier est un abonné joignable par l'intermédiaire du réseau téléphonique ou alternativement avec un centre de commutation 9 permettant d'atteindre l'abonné appelé, lorsque ce dernier est un abonné alors accessible via un réseau radiotéléphonique dont fait partie le centre 9 considéré. Il est bien entendu envisageable de programmer les différents matériels de télécommunications concernés que constituent les centraux téléphoniques et les bases de manière que l'identifiant de l'abonné appelé soit émis et donc reçu avant l'identifiant de l'abonné appelant dans un ensemble d'identifiants d'abonné transmis dans le cadre d'un appel réalisé à partir d'une base.

Une transmission de l'identifiant d'abonné appelant est initiée par le central de rattachement en direction de l'abonné appelé, dans les conditions classiquement prévues dans le cadre d'un appel impliquant une mise en oeuvre d'un service d'identification d'abonné appelant. Ceci s'applique, bien entendu, quelle que soit la position respective de l'identifiant de l'abonné appelant par rapport à celle de l'identifiant de l'abonné qu'il appelle, dans l'ensemble émis par la base assurant l'appel.

Il est prévu de transmettre l'identifiant d'abonné appelant sous une forme abrégée entre base et central de rattachement dans la mesure où la transmission de la totalité d'un identifiant, par l'intermédiaire d'une ligne téléphonique L de type analogique , prend un temps relativement long, si cet identifiant est constitué d'un numéro complet d'appel de ligne téléphonique ou d'abonné de terminal radiotéléphonique.

La séquence utilisée peut alors être de la forme: *N#0ZABPQMCDU où N correspond par exemple au numéro de référence du terminal appelant, ce nombre étant par exemple un nombre entier compris entre 1 et 10.

Ceci peut être aisément obtenu en programmant spécifiquement, de manière connue en elle-même, la logique de gestion 6D ou 7D de la base concernée et l'ensemble de gestion 5D de son central téléphonique de rattachement 5. Cette programmation a pour objectif de permettre que la base soit apte à émettre des séquences à identifiant réduit N d'abonné appelant et que le réseau téléphonique soit apte à traduire l'identifiant N sous la forme de l'identifiant complet de l'abonné appelant, Cette traduction s'effectue par exemple au niveau du central téléphonique de rattachement de la base, ce central mémorisant alors cet identifiant complet de manière permanente.

Bien entendu, l'invention s'applique à des installations regroupant plusieurs terminaux dont les architectures peuvent être plus ou moins élaborées. Au moins dans le cas des installations les plus simples, telle que par exemple une installation constituée par la mise en parallèle de plusieurs terminaux téléphoniques sur une même ligne, ce sont les terminaux qui comportent eux-mêmes les moyens permettant la mise en oeuvre du procédé selon l'invention.

## Revendications

1. Procédé pour la communication à un abonné, téléphonique ou radiotéléphonique joignable par l'intermédiaire d'un réseau téléphonique (1), d'un identifiant relatif à un abonné de réseau téléphonique ou radiotéléphonique (2) qui l'appelle au moyen d'un terminal (3 ou 4'), lorsque cet abonné effectue son appel, via une ligne analogique (L) du réseau téléphonique qui est attribuée à une installation de desserte d'abonnés et notamment à une installation de type base (6 ou 7) avec laquelle cet abonné s'est mis en liaison via le terminal qu'il utilise, ladite installation étant prévue pour permettre un accès partagé de plusieurs terminaux, identiques ou compatibles, au réseau téléphonique, caractérisé en ce qu'il prévoit que l'appel effectué par un terminal en liaison avec une installation de desserte d'abonné, pour un appel à destination d'un abonné joignable par l'intermédiaire du réseau téléphonique, qui implique de manière connue une phase préalable de prise de ligne au niveau de l'installation et couramment la réception par cette base d'une tonalité d'invitation à numéroter en provenance du réseau, via la ligne prise, comporte de plus l'envoi sur la ligne par l'installation et d'un ensemble d'identifiants d'abonnés (ID1, ID2) comprenant un identifiant d'abonné appelant et un identifiant de l'abonné appelé par l'intermédiaire du terminal de l'abonné appelant, pour l'appel en cours, qui est éventuellement précédé d'un code signalétique de service (CS), de manière à permettre l'exploitation de l'identifiant d'abonné appelé par le réseau téléphonique pour la réalisation de l'appel, la transmission de l'identifiant d'abonné appelant à l'abonné appelé, via le réseau téléphonique, et éventuellement l'exploitation de l'identifiant d'abonné appelant par le réseau.

2. Procédé, selon la revendication 1, selon lequel il est prévu une phase d'envoi d'un ensemble d'identifiants, dans lequel l'identifiant d'abonné appelé précède l'identifiant d'abonné appelant dont il est séparé, sur une ligne (L) de réseau téléphonique desservant une installation de desserte d'abonnés en cas d'appel initié par un terminal, en liaison à cet effet avec cette installation.

3. Procédé, selon la revendication 1, selon lequel il est prévu une phase d'envoi d'un ensemble d'identifiants, dans lequel l'identifiant d'abonné appelant précède l'identifiant d'abonné appelé dont il est séparé, sur une ligne (L) de réseau téléphonique desservant une installation de desserte d'abonnés en cas d'appel initié par un terminal, en liaison à cet effet avec cette installation.

4. Procédé selon l'une des revendications 1 à 3, dans lequel l'identifiant d'abonné appelant transmis par une installation de desserte d'abonné au réseau téléphonique en cas d'appel d'un abonné, au moyen d'un terminal téléphonique (3), ou radiotéléphonique mobile (4') alors en liaison radiotéléphonique avec cette installation, est constitué par le numéro d'appel attribué à l'abonné appelant dans le réseau téléphonique (1) ou radiotéléphonique (2) auquel il est abonné.

5. Procédé selon l'une des revendications 1 à 3, dans lequel l'identifiant d'abonné appelant transmis par une installation de desserte d'abonnés au réseau téléphonique (1) en cas d'appel est un identifiant réduit destiné à être traduit sous forme d'un identifiant complet d'abonné appelant au niveau du réseau.

6. Matériel de télécommunications intégrable ou raccordable à un réseau téléphonique et notamment central téléphonique de réseau ou installation de desserte d'abonnés, notamment de type base, prévue pour être raccordée à un réseau téléphonique, ou terminal d'abonné, caractérisé en ce qu'il comporte des moyens matériels et/ou logiciels lui permettant de mettre en oeuvre le procédé selon au moins l'une des revendications 1 à 5.
